# EUROPÄISCHE PATENTANMELDUNG

(11) **EP 2 955 063 A1**
(43) Veröffentlichungstag der Anmeldung: **16.12.2015**
(21) Anmeldenummer: 14171979.9
(22) Anmeldetag: 11.06.2014
(51) Int. Cl.: B60Q 1/26, F21S 8/10, F21W 101/12, F21W 101/14

(54) **Kraftfahrzeugleuchte**

(71) Anmelder: odelo GmbH, 70329 Stuttgart (DE)
(72) Erfinder: Bisch, Valentin, 70186 Stuttgart (DE); Heller, Andreas, 70197 Stuttgart (DE); Vlastnik, Andreas, 71640 Ludwigsburg (DE)
(74) Vertreter: Benninger, Johannes

(57) **Zusammenfassung**

Es wird eine Kraftfahrzeugleuchte (01) mit einer Lichtscheibe (02) und mindestens einem zumindest zwei Licht unterschiedlicher Lichtquellenfarben abstrahlende Lichtquellen umfassenden ersten Leuchtmittel für mindestens eine erste Lichtfunktion (03, 04) der Kraftfahrzeugleuchte (01) beschrieben. Die Lichtscheibe (02) ist vollständig in einer Lichtscheibenfarbe eingefärbt. Ein gemeinsam von den Licht unterschiedlicher Lichtquellenfarben abstrahlenden Lichtquellen ausgestrahltes Mischlicht weist eine Mischfarbe auf, welche beim Durchtritt des Mischlichts durch die Lichtscheibe (02) hindurch zu einer Lichtfarbe einer ersten Lichtfunktion (03, 04) gefiltert wird.

## Beschreibung

Die Erfindung betrifft eine Kraftfahrzeugleuchte gemäß dem Oberbegriff des Anspruchs 1.

Eine typische Kraftfahrzeugleuchte umfasst im Wesentlichen einen von einem Leuchtengehäuse und einer Lichtscheibe zumindest teilweise umschlossenen Leuchteninnenraum und mindestens ein wenigstens zum Teil darin beherbergtes, zumindest eine Lichtquelle umfassendes Leuchtmittel für mindestens eine Lichtfunktion der Kraftfahrzeugleuchte.

Jede Kraftfahrzeugleuchte erfüllt je nach Ausgestaltung eine oder mehrere Aufgaben beziehungsweise Funktionen. Zur Erfüllung jeder Aufgabe beziehungsweise Funktion ist mindestens eine Lichtfunktion der Kraftfahrzeugleuchte vorgesehen.

Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Nacht und/oder Tag, wie etwa bei einer Ausgestaltung als eine Heckleuchte oder als eine Tagfahrleuchte.

Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Jede Lichtfunktion muss eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Dabei sind je nach Lichtfunktion auch Raumwinkelbereiche vorgegeben, in die kein oder nur begrenzt Licht abgestrahlt werden darf, beispielsweise um eine Blendwirkung anderer Verkehrsteilnehmer auszuschließen.

Wenigstens einer Lichtquelle zumindest eines zur Erfüllung mindestens einer Lichtfunktion der Kraftfahrzeugleuchte vorgesehenen Leuchtmittels können ein oder mehrere zur Ausformung einer beispielsweise gesetzlich vorgegebenen Lichtverteilung beitragende Optikelemente zur Lichtlenkung zugeordnet sein.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln, um nur einige denkbare Optikelemente zu nennen.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Den einzelnen Lichtfunktionen sind nicht nur zum Teil unterschiedliche Helligkeiten bzw. Sichtweiten zugeordnet, sondern zum Teil auch unterschiedliche Lichtfarben.

Dabei sind nicht nur die Lichtfarben für die einzelnen Lichtfunktionen vorgegeben, sondern darüber hinaus für jede Lichtfarbe jeder Lichtfunktion exakt Wellenlängenbereiche im Spektrum des vom menschlichen Auge wahrnehmbaren, im Folgenden als sichtbar bezeichneten Lichts vorgegeben, innerhalb welcher Wellenlängenbereiche die vorgegebenen Lichtfarben der einzelnen Lichtfunktionen jeweils liegen müssen.

Nun kommen unter anderem wegen ihres geringen Stromverbrauchs, geringen Bauraumbedarfs und ihrer hohen Lebensdauer zur Erfüllung einer oder mehrerer Lichtfunktionen in insbesondere in als Heckleuchten ausgebildeten Kraftfahrzeugleuchten vermehrt anorganische Leuchtdioden und/oder organische Leuchtdioden als Lichtquellen zum Einsatz.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Eine LED umfasst neben dem bereits erwähnten mindestens einen LED-Chip auch mindestens ein Kontaktmittel zur elektrischen Kontaktierung des LED-Chips. Üblicherweise verfügt jede Leuchtdiode über einen Bonddraht je LED-Chip, welcher je einen LED-Chip elektrisch kontaktiert. Dieser Bonddraht bildet ein erstes Kontaktmittel für den LED-Chip der LED. Der Bonddraht kann mit einem ersten elektrischen Anschluss verbunden sein, welcher zur elektrischen Kontaktierung der LED beispielsweise mit einer ersten Leiterbahn eines Leuchtmittelträgers vorgesehen sein kann. Ein zweites Kontaktmittel für den LED-Chip der LED bildet der LED-Chip selbst. Zur elektrischen Kontaktierung kann der LED-Chip mit einem zweiten elektrischen Anschluss verbunden sein, welcher zur elektrischen Kontaktierung der LED beispielsweise mit einer zweiten Leiterbahn eines Leuchtmittelträgers vorgesehen sein kann.

Die LED kann darüber hinaus einen den LED-Chip unmittelbar umgebenden Primärreflektor aufweisen. Dieser Primärreflektor kann beispielsweise durch Wandungen einer den LED-Chip umgebenden Ausnehmung und/oder durch einen Napf gebildet sein, in dem der LED-Chip angeordnet ist. Der Napf kann mit dem erwähnten zweiten Anschluss verbunden sein, diesen bilden oder umfassen oder von diesem umfasst werden.

Bei speziellen Ausführungen von LEDs können einzelne oder alle Kontaktmittel selbst die elektrischen Anschlüsse bilden, wie nachfolgend zu den verschiedenen Kontaktierungsmöglichkeiten von LEDs ausgeführt.

Bekannt sind LEDs zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-LEDs sind ein gängig bekannter Typ LEDs. Sie werden auch als bedrahtete LEDs bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-LEDs sind ein weiterer bekannter Typ LEDs. SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächenmontage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-LEDs bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet

Bei einer organischen Leuchtdiode, kurz OLED (von Organic Light Emitting Diode; OLED) handelt es sich um ein leuchtendes Dünnschichtbauelement aus organischen halbleitenden Materialien mit mindestens einer Emitterschicht, das sich von den anorganischen LEDs dadurch unterscheidet, dass keine einkristallinen Materialien erforderlich sind. Im Vergleich zu anorganischen LEDs lassen sich organische Leuchtdioden daher in kostengünstiger Dünnschichttechnik herstellen. OLEDs ermöglichen dadurch die Herstellung flächiger Lichtquellen, die einerseits sehr dünn und andererseits als durch die Lichtscheibe einer Kraftfahrzeugleuchte hindurch sichtbare leuchtende Fläche eingesetzt einen besonders homogenes Erscheinungsbild aufweisen.

Anders als Glühlampen oder Gasentladungslampen sind LEDs und OLEDs keine Wärmestrahler. Sie emittieren Licht in einem begrenzten, von den verwendeten Materialien und/oder deren Eigenschaften, wie beispielsweise deren Dotierung abhängigen Spektralbereich, das Licht ist nahezu monochromatisch. Deshalb sind sie beim Einsatz als Lichtquelle für Lichtfunktionen in Kraftfahrzeugleuchten besonders effizient im Vergleich zu anderen Lichtquellen, bei denen zur Erzielung einer monochromen Farbcharakteristik Farbfilter den größten Teil des Spektrums absorbieren müssen.

Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. In naher Zukunft die Vorteile von LEDs ebenfalls aufweisende OLEDs haben darüber hinaus das Potential einer einfachen Herstellbarkeit. Dadurch und unter anderem auch wegen ihrer kompakteren Abmessungen können durch Verwendung von LEDs und/oder OLEDs als Lichtquelle von Leuchtmitteln besonders kompakte Kraftfahrzeugleuchten verwirklicht werden, die an fast jede nur erdenkliche Einbausituation angepasst sein können.

Eine typische Anpassung an die Einbausituation betrifft die äußere Gestalt der Kraftfahrzeugleuchte. Diese sich im so genannten Strakverlauf der Kraftfahrzeugleuchte widerspiegelnde äußere Gestalt der Kraftfahrzeugleuchte ist beispielsweise durch die gestalterische Formgebung eines Kraftfahrzeugs sowie durch die vorgesehene Kontur der Kraftfahrzeugleuchte vorgegeben.

Der Strakverlauf führt dabei entsprechend einer gestalterischen Vorgabe die Formgebung eines Kraftfahrzeugs über die zum Einbau einer Kraftfahrzeugleuchte vorgesehene Öffnung in einer Karosserie des Kraftfahrzeugs hinweg fort, wobei sich zumindest ein Randbereich der Lichtscheibe bündig in eine von einem die Einbauöffnung umgebenden Rand der Karosserie vorgegebene Fläche einfügt.

Eine weitere typische Anpassung einer Kraftfahrzeugleuchte an die Einbausituation betrifft den zur Verfügung stehenden Bauraum. Dabei wird ein möglichst geringer Bauraumbedarf angestrebt, beispielsweise um bei einer Ausgestaltung einer Kraftfahrzeugleuchte als Heckleuchte mehr Platz für den Kofferraum eines Kraftfahrzeugs zur Verfügung zu haben und um gleichzeitig Material und Gewicht zu sparen, wodurch beispielsweise Energieeinsparungen, wie etwa Verbrauchseinsparungen von Treibstoff oder einer geringeren Belastung eines Stromspeichers einhergehend mit einer Verringerung der Umweltbelastung sowohl bei der Herstellung, als auch im Betrieb des Kraftfahrzeugs erreicht werden können.

Neben einer Anpassung an die Einbausituation müssen Kraftfahrzeugleuchten sehr hohe Qualitätsanforderungen erfüllen. So werden beispielsweise bereits geringe Abweichungen von einem homogenen Eindruck des Erscheinungsbilds sowohl im ausgeschalteten Zustand des Leuchtmittels, dem so genannten Kaltzustand, wie beispielsweise ein dunkel erscheinendes Lampenloch, als auch im so genannten Warmzustand bei eingeschaltetem Leuchtmittel, wie beispielsweise hinsichtlich der Ausleuchtung einer Leuchtenkammer und/oder eines Reflektors, und/oder ein möglicherweise blendender direkter Blick des Betrachters auf die Lichtquelle eines Leuchtmittels, als qualitätsmindernd angesehen.

Um den hohen Qualitätsanforderungen an Kraftfahrzeugleuchten gerecht zu werden, ist es deshalb ein Ziel bei der Entwicklung von Kraftfahrzeugleuchten, das oder die Lichtquellen einer oder mehrerer Lichtfunktionen einer Kraftfahrzeugleuchte vor dem direkten Blick eines Betrachters zu verbergen.

Um eine oder mehrere, ihr Licht in einen oder mehrere Reflektoren strahlende Lichtquellen eines Leuchtmittels dem Blick des Betrachters zu entziehen, welches Licht mittels Reflexion an entsprechenden Formen bzw. Reflektorstrukturen auf dem Reflektor, wie etwa Kissen, Walzen, etc., in eine gewünschte Richtung gelenkt wird, ist bekannt, die Lichtquelle beispielsweise oberhalb oder unterhalb des Reflektors oder neben diesem anzuordnen und das von ihr abgestrahlte Licht seitlich in einen Reflektor einzustrahlen. Hierdurch ist die Lichtquelle für den Betrachter beim direkten Blick aus normaler Richtung, wie dies der Sicht eines anderen Verkehrsteilnehmers bei in ein Kraftfahrzeug eingebautem Zustand entspricht, auf die Kraftfahrzeugleuchte nicht erkennbar. Diese wird erst sichtbar, sobald der Betrachter von oben oder unten her in die Kraftfahrzeugleuchte blickt. Da dies tatsächlich eher selten vorkommt, können Lichtquellen auf diese Art gut verborgen werden und der Reflektor weitestgehend lampenlochfrei gehalten werden.

Aufgrund der meist starken Strakverläufe ist es jedoch nicht immer möglich die Lichtquellen in einer lichttechnisch günstigen Lage, wie etwa direkt abstrahlend oder von oben oder unten her in den Reflektor einstrahlend einzubinden. Zum anderen kann hierdurch unabhängig vom Strakverlauf nicht vollständig sichergestellt werden, dass dadurch ein direkter Blick auf die Lichtquelle von außen durch die Lichtscheibe hindurch vollständig verwehrt ist.

So kommt es insbesondere bei starken Strakverläufen vor, dass die Lichtquellen bei der Betrachtung von außerhalb der Kraftfahrzeugleuchte durch die Lichtscheibe hindurch teilweise sichtbar sind. Eine zumindest aus einigen Blickwinkeln von außerhalb der Kraftfahrzeugleuchte durch die Lichtscheibe hindurch sichtbare Lichtquelle eines zur Erfüllung einer Lichtfunktion vorgesehenen Leuchtmittels wird als störend und den Qualitätseindruck nachhaltig negativ beeinflussend empfundenen.

Ein vollständiges Verbergen der Lichtquellen ist erst z. B. mittels auch als Lichtleiter und/oder lichtleitende Optikkörper bezeichneter Lichtleiterelemente möglich, die das von einer verborgen angeordneten Lichtquelle in sie eingekoppelte Licht zu leiten entfernt von der Einkopplung wieder auskoppeln. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert. Auch Kombinationen aus direkter und indirekter Abstrahlung sind möglich, wobei das Lichtleiterelement hinter der Lichtscheibe sowie gegebenenfalls einer Optikscheibe von außerhalb des Leuchteninnenraums aus sichtbar angeordnet ist und zusätzlich ein hinter dem Lichtleiterelement angeordneter Reflektor vorgesehen ist.

Lichtleiterelemente werden zunehmend anstelle von oder zusätzlich zu einem oder mehreren der erwähnten Optikelemente in Kraftfahrzeugleuchten eingesetzt, beispielsweise gerade weil diese eine für einen Betrachter verborgene Anordnung der Lichtquelle ermöglichen.

Nachteilig an den erwähnten Möglichkeiten, Lichtquellen von zur Erfüllung von Lichtfunktionen vorgesehenen Leuchtmitteln dem Blick des Betrachters zu entziehen ist, dass diese zum Einen selbst zumindest zum Teil die Gefahr von Qualitätseinbußen bergen, wie beispielsweise durch eine inhomogene Ausleuchtung eines Lichtleiterelements, und zum Anderen trotz des teils erheblichen betriebenen Aufwands ein vollständiges Verbergen der Lichtquellen nicht garantieren.

Eine Einfärbung der Lichtscheibe verspricht auf wesentlich kostengünstigere Art und weise qualitätsmindernde Effekte zumindest zu mindern, wenn nicht gar zu verhindern.

Eine vollständige Einfärbung ist jedoch nur in einer neutralen Graustufe möglich, was jedoch eine Abschwächung der Helligkeit aller Lichtfunktionen einhergehend mit einer sehr starken Einschränkung der das Verhältnis des aus der Kraftfahrzeugleuchte durch die Lichtscheibe in einer gewünschten oder vorgegebenen Lichtverteilung austretenden und einer Lichtfunktion zugeordneten Lichts zu dem von der oder den zur Erfüllung der Lichtfunktion vorgesehenen Lichtquellen ausgestrahlten Licht wiederspiegelnden optischen Güte nach sich zieht.

Um diesen Nachteil zu umgehen ist bekannt, abschnittsweise eine Einfärbung in einer einer Lichtfarbe einer Lichtfunktion entsprechenden Farbe vorzusehen.

Hieraus resultieren in unterschiedliche Flächenabschnitte mit verschiedenen Einfärbungen unterteilte Lichtscheiben. Eine variable Zuordnung von Flächenabschnitten zu verschiedenfarbigen Lichtfunktionen ist hiermit nicht möglich.

Da die Lichtfunktionen von insbesondere als Heckleuchten ausgeführten Kraftfahrzeugleuchten in erster Linie einer Signal- und damit auch Warnfunktion für andere Verkehrsteilnehmer dienen, bedeutet eine Begrenzung eines zum Lichtdurchtritt einer Lichtfunktion zur Verfügung stehenden Flächenabschnitts eine Einschränkung der Verkehrssicherheit.

Alternativ werden Lichtscheiben mit ausschließlich rot eingefärbten Flächenabschnitten für Lichtfunktionen roter Lichtfarbe verwendet, sowie ein oder mehrere nicht eingefärbte Flächenabschnitte für verbleibende Lichtfunktionen gelber und/oder weißer Lichtfarbe verwendet, einhergehend mit dem Nachteil, dass die nicht eingefärbten Flächenabschnitte keinen Beitrag zu einer Kaschierung der dahinter angeordneten Lichtquellen leisten. Darüber hinaus ist durch die nur zum Teil eingefärbte Lichtscheibe der zum Lichtdurchtritt einer Lichtfunktion zur Verfügung stehende Flächenabschnitt ebenfalls beschränkt, wodurch auch hier eine Einschränkung der Verkehrssicherheit vorliegt.

Durch JP 2002 319306 A ist ein Leuchtmittel für eine Kraftfahrzeugleuchte bekannt, welcher die Lichtfarbe einer Gasentladungslampe nachahmt. Das Leuchtmittel umfasst eine Glühlampe mit einem dahinter angeordneten Reflektor, welcher von der Glühlampe rückseitig abgestrahltes Licht nach vorne umlenkt, sowie mit einer im Strahlengang des von der Glühlampe direkt sowie via des Reflektors indirekt nach vorn abgestrahlten Lichts angeordneten Sammellinse. Der Glaskolben der Glühlampe, die Oberfläche des Reflektors sowie die Sammellinse sind mit Farbumwandlungsmitteln versehen, welche das abgestrahlte Licht ausgehend von einem weißen Lichtort innerhalb eines XYZ-Farbsystems zur grünen Seite hin entlang einer xy-Farbkurve verschieben.

Durch JP 2001 039214 A ist bekannt, bei einer hoch gesetzten dritten Bremsleuchte grüne LEDs geringer Lichtstärke und eine Bremstätigkeit anzeigende rote LEDs in gleichmäßigem Abstand nebeneinander anzuordnen. Durch die gleichmäßige Anordnung beinträchtigen die grünen LEDs selbst während deren Betriebs nicht die Warnfunktion des von den roten LEDs im Falle einer Bremstätigkeit abgestrahlten Lichts.

Eine Aufgabe der Erfindung ist es, eine Kraftfahrzeugleuchte mit einem hohen Qualitätseindruck zu entwickeln, welche einer Erhöhung der Verkehrssicherheit beiträgt und darüber hinaus kostengünstig herstellbar ist.

Die Aufgabe wird gelöst mit den Merkmalen des unabhängigen Anspruchs.

Vorteilhafte Ausführungsformen sind in den abhängigen Ansprüchen, den Zeichnungen sowie in der nachfolgenden Beschreibung, einschließlich der zu den Zeichnungen zugehörigen Figurenbeschreibung, wiedergegeben.

Zur Lösung der Aufgabe ist demnach eine Kraftfahrzeugleuchte vorgesehen, welche im Wesentlichen vorzugsweise einen von einem Leuchtengehäuse und einer Lichtscheibe zumindest teilweise umschlossenen Leuchteninnenraum und mindestens ein beispielsweise wenigstens zum Teil in dem gegebenenfalls vorgesehenen Leuchteninnenraum beherbergtes, zumindest zwei Licht unterschiedlicher Lichtquellenfarben abstrahlende Lichtquellen umfassendes erstes Leuchtmittel für mindestens eine erste Lichtfunktion der Kraftfahrzeugleuchte umfasst.

Die Lichtscheibe ist vollständig in einer von einer reinen Graustufe abweichenden Lichtscheibenfarbe eingefärbt.

Die Lichtscheibenfarbe kann einen Graustufenanteil aufweisen.

Das gemeinsam von den Licht unterschiedlicher Lichtquellenfarben abstrahlenden Lichtquellen ausgestrahlte Mischlicht weist eine Mischfarbe auf, welche beim Durchtritt des Mischlichts durch die Lichtscheibe hindurch zu einer Lichtfarbe einer ersten Lichtfunktion gefiltert wird.

Die Licht unterschiedlicher Lichtquellenfarben abstrahlenden Lichtquellen zumindest eines wenigstens zwei Licht unterschiedlicher Lichtquellenfarben abstrahlende Lichtquellen umfassenden ersten Leuchtmittels können vorzugsweise unabhängig voneinander betrieben werden.

Hierdurch kann ein wenigstens zwei Licht unterschiedlicher Lichtquellenfarben abstrahlende Lichtquellen umfassendes erstes Leuchtmittel durch Betrieb seiner Lichtquellen sämtlicher Lichtquellenfarben eine erste Lichtfunktion der Kraftfahrzeugleuchte erfüllen, sowie durch Betrieb nur seiner Lichtquellen einer Lichtquellenfarbe eine zweite Lichtfunktion mit einer von einer ersten Lichtfarbe abweichenden Lichtfarbe erfüllen.

Sofern mindestens ein wenigstens zwei Licht unterschiedlicher Lichtquellenfarben abstrahlende Lichtquellen umfassendes erstes Leuchtmittel Lichtquellen umfasst, die drei oder mehr unterschiedliche Lichtquellenfarben abstrahlen, so können zusätzlich durch paar- oder gruppenweise Kombination des Betriebs unterschiedliche Lichtquellenfarben abstrahlender Lichtquellen eines ersten Leuchtmittels eine oder mehrere Lichtfunktionen mit einer von einer Lichtfarbe einer ersten Lichtfunktion abweichenden Lichtfarbe erfüllt werden, beispielsweise eine Lichtfunktion mit einer Lichtfarbe einer weiteren ersten Lichtfunktion.

Vorzugsweise weist die Kraftfahrzeugleuchte zur Erfüllung mindestens einer zweiten Lichtfunktion mit einer von der Lichtfarbe einer ersten Lichtfunktion abweichenden Lichtfarbe mindestens ein zweites Leuchtmittel mit mindestens einer Licht einer Lichtquellenfarbe abstrahlenden Lichtquelle auf.

Bevorzugt ist die Lichtscheibe vollständig in einer der Lichtfarbe einer zweiten Lichtfunktion entsprechenden Lichtscheibenfarbe eingefärbt.

Besonders bevorzugt ist die Lichtscheibe vollständig in einer roten Lichtscheibenfarbe eingefärbt.

Vorzugsweise weist mindestens ein erstes Leuchtmittel wenigstens eine Licht grüner Lichtquellenfarbe abstrahlende Lichtquelle auf.

Bevorzugt sind demnach mindestens einem zur Erfüllung einer ersten Lichtfunktion mit einer von Rot abweichenden Lichtfarbe vorgesehenen Leuchtmittel eine oder mehrere zusätzliche Lichtquellen zugeordnet, welche grünes Licht abstrahlen.

Eine Lichtfarbe einer ersten Lichtfunktion ist hierbei vorzugsweise gelb für eine einer Fahrtrichtungsanzeige dienenden Wiederholblinklichtfunktion.

In Verbindung mit einer roten Lichtscheibe kann damit mindestens ein zumindest zwei Licht unterschiedlicher Lichtquellenfarben abstrahlende Lichtquellen umfassendes erstes Leuchtmittel zur Erfüllung einer ersten Lichtfunktion gelber Lichtfarbe mindestens eine Licht beispielsweise gelber und/oder roter Lichtquellenfarbe abstrahlende Lichtquelle und mindestens eine Licht grüner Lichtquellenfarbe abstrahlende Lichtquelle aufweisen.

Eine Lichtfarbe einer alternativen oder zusätzlichen ersten Lichtfunktion ist hierbei vorzugsweise weiß für eine ein Rückwärtsfahren anzeigende und/oder einer Rückfahrbeleuchtung dienenden Rückfahrlichtfunktion.

Besonders bevorzugt handelt es sich zumindest bei den unterschiedliche Lichtquellenfarben abstrahlenden Lichtquellen um LEDs und/oder Emitterschichten einer oder mehrerer OLEDs.

Beispielsweise kann bei weißen LEDs durch zusätzlichen Eintrag von Licht grüner Lichtquellenfarbe der Farbfiltereffekt durch eine rote Lichtscheibe kompensiert werden, so dass die Kombination von weißem und grünem Licht einen gesetzlich zulässigen Farbort einer Rückfahrlichtfunktion erfüllt.

Wichtig ist eine ausreichende Lichtdurchmischung des aus Licht unterschiedlicher Lichtquellenfarben zusammengesetzten Mischlichts, so dass im Fernfeld eine einheitliche Mischfarbe messbar wird.

Dies kann durch einer oder mehreren Licht unterschiedlicher Lichtfarbe abstrahlenden Lichtquellen eines oder mehrerer erster Leuchtmittel zugeordnete Lichtleiterelemente und/oder Optikelemente, wie beispielsweise Reflektoren, Linsen und/oder im Strahlengang zwischen wenigstens einer Lichtquelle eines ersten Leuchtmittels und der Lichtscheibe angeordnete Optikscheiben und/oder Diffusoren, erzielt werden.

Bei der Reflektorlösung ist als Besonderheit zu beachten, dass Licht unterschiedlicher Lichtquellenfarbe abstrahlende Lichtquellen zum Reflektor fokussiert und/oder defokusiert positioniert sein können. Durch die beidseitige Defokussierung der Licht unterschiedlicher Lichtquellenfarbe abstrahlenden Lichtquellen kann beispielsweise eine gleichmäßigere Lichtdurchmischung erzielt werden.

Wenigstens einer Lichtquelle zumindest eines zur Erfüllung mindestens einer Lichtfunktion der Kraftfahrzeugleuchte vorgesehenen Leuchtmittels können ein oder mehrere zur Ausformung einer beispielsweise gesetzlich vorgegebenen Lichtverteilung beitragende Optikelemente zur Lichtlenkung zugeordnet sein.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln, um nur einige denkbare Optikelemente zu nennen.

Beispielsweise kann in einem gegebenenfalls vorgesehenen Leuchteninnenraum mindestens ein wenigstens einer Lichtquelle zumindest eines Leuchtmittels zugeordneter Reflektor untergebracht sein. Der Reflektor kann zumindest zum Teil durch ein separates Bauteil und/oder durch wenigstens einen Teil eines Leuchtengehäuses gebildet sein, beispielsweise vermittels einer zumindest teilweisen, reflektierenden Beschichtung.

Darüber hinaus können Walzen- Kissen- oder andersartige Optiken in der Lichtscheibe und/oder einer zwischen mindestens einem Leuchtmittel bzw. dessen Lichtquellen und der Lichtscheibe angeordneten Optikscheibe vorgesehen sein, um einer gewünschten Lichtverteilung für eine vorgegebene Lichtfunktion beizutragen.

Die Lichtscheibe selbst kann alternativ oder zusätzlich als ein Optikelement ausgebildet sein, beispielsweise indem sie vorzugsweise an deren mindestens einem Leuchtmittel zugewandter Innenseite mit einer zur Erzeugung einer oder mehrerer beispielsweise gesetzlich vorgegebener Lichtverteilungen beitragenden optischen Struktur versehen ist. Hierdurch kann gegebenenfalls auf eine Optikscheibe verzichtet werden.

Mindestens einem beispielsweise in einem gegebenenfalls vorgesehenen Leuchteninnenraum beherbergten Leuchtmittel kann ein Lichtleiterelement zugeordnet sein.

Ein Lichtleiterelement weist mindestens eine Lichteinkoppelfläche sowie mindestens eine von der Lichteinkoppelfläche verschiedene Lichtaustrittsfläche auf. An der mindestens einen Lichteinkoppelfläche wird Licht mindestens einer Lichtquelle in das Lichtleiterelement eingekoppelt und an der mindestens einen von der Lichteinkoppelfläche verschiedenen Lichtaustrittsfläche wird das Licht wieder aus dem Lichtleiterelement ausgekoppelt.

Das Lichtleiterelement kann darüber hinaus mindestens eine wenigstens einer Lichtaustrittsfläche zugeordnete, von dieser zugeordneten Lichtaustrittsfläche verschiedene, beispielsweise auf einer Lichtleiterrückseite gegenüber der Lichtaustrittsfläche angeordnete Lichtumlenkfläche aufweisen.

Ein gegebenenfalls vorgesehenes Lichtleiterelement kann Teil eines Leuchtmittels sein, oder als separates Bauteil in einem gegebenenfalls vorgesehenen Leuchteninnenraum untergebracht sein.

Dem Lichtleiterelement kann mindestens ein Optikelement, wie etwa ein Reflektor und/oder eine Optikscheibe und/oder ein Rinnenkonzentrator zugeordnet sein, um nur einige mögliche Optikelemente aufzuzählen.

Das Lichtleiterelement kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen.

Ein gegebenenfalls vorgesehenes Leuchtengehäuse bzw. der gegebenenfalls vorgesehene Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Die Kraftfahrzeugleuchte kann beispielsweise als Heckleuchte für ein Kraftfahrzeug ausgebildet sein.

Die Kraftfahrzeugleuchte kann alternativ oder zusätzlich zu einzelnen oder mehreren Merkmalen der zuvor beschriebenen Ausführungsvarianten ein Merkmal oder eine Kombination mehrerer Merkmale einer oder mehrerer einleitend beschriebener Kraftfahrzeugleuchten sowie alternativ oder zusätzlich ein Merkmal oder eine Kombination mehrerer Merkmale einer oder mehrerer aus einem oder mehreren einleitend zum Stand der Technik erwähnten Dokumenten bekannter Kraftfahrzeugleuchten und/oder eines oder mehrerer aus einem oder mehreren einleitend zum Stand der Technik erwähnten Dokumenten bekannter Leuchtmittel und/oder eines oder mehrerer aus einem oder mehreren einleitend zum Stand der Technik erwähnten Dokumenten bekannter Lichtleiterelemente aufweisen.

Es ist ersichtlich, dass die Erfindung durch eine Kraftfahrzeugleuchte mit einer einheitlich gefärbten Lichtscheibe und mindestens einer Lichtfunktion mit einer von der Färbung der Lichtscheibe abweichenden Lichtfarbe verwirklicht sein kann.

Hierdurch kann eine Heckleuchte mit roter Lichtscheibe verwirklicht werden, deren mindestens eines zur Erfüllung einer Lichtfunktion mit einer von Rot abweichenden Lichtfarbe vorgesehenes Leuchtmittel zusätzlich zu mindestens einer Licht einer ersten Lichtquellenfarbe abstrahlenden Lichtquelle wenigstens eine zusätzliche Lichtquelle umfasst, welche Licht zumindest einer weiteren Lichtquellenfarbe abstrahlt, welches gemeinsam mit dem Licht der ersten Lichtquellenfarbe mit dem Durchtritt durch die rote Lichtscheibe der Heckleuchte Licht der zur Erfüllung der Lichtfunktion vorgesehenen Lichtfarbe erzeugt.

Durch die Erfindung können Lichtfunktionen für ein Kraftfahrzeug mit von rot abweichenden Lichtfarben in einer Heckleuchte mit vollflächig roter Lichtscheibe verwirklicht werden.

Zusammen ergibt sich damit die Möglichkeit, in für Lichtfunktionen mit von Rot abweichender Lichtfarbe vorgesehenen Leuchtmitteln auch hinter einer roten Lichtscheibe weiterhin Lichtquellen einzusetzen, welche in Verbindung mit farblosen Lichtscheiben bereits heute eingesetzt werden, und zur Kompensation von Farbverschiebungen, welche durch eine rote Lichtscheibe auftreten, diesen Leuchtmitteln Lichtquellen beizuordnen, welche diese Farbverschiebungen durch die Abstrahlung von Licht entsprechender Farbe kompensieren.

Vorteile gegenüber dem Stand der Technik ergeben sich neben einer vollständigen Lösung der gestellten Aufgabe unter Behebung der Nachteile des Standes der Technik unter Anderem durch eine einheitlich rote Abmusterung der Lichtscheibe, die zu einer gewünschten einheitlich roten Lichtscheibenfarbe keine andersfarbigen Farbtakte benötigt.

Indem die Lichtfarben der einen oder mehreren ersten Lichtfunktionen durch Filtration von mischfarbenem Mischlicht erzeugt werden, steht grundsätzlich für jede Lichtfunktion beliebiger Lichtfarbe die gesamte Lichtscheibe als Lichtdurchtrittsfläche zur Verfügung, unter einer deutlichen Erhöhung der Signalwirkung und einer damit einhergehenden nachhaltigen Steigerung des Beitrags zur Verkehrssicherheit von mit einer solchen Kraftfahrzeugleuchte ausgestatteten Kraftfahrzeugen.

Weitere Vorteile gegenüber dem Stand der Technik ergeben sich durch eine Vereinfachung der Herstellung von Lichtscheiben für Heckleuchten, welche dadurch einfarbig rot hergestellt werden können. Gleichzeitig ergibt sich als Vorteil gegenüber farblosen Lichtscheiben der Vorteil, dass der Leuchteninnenraum im Kaltzustand der Heckleuchte weniger stark einsehbar ist und darüber hinaus für die zur Erfüllung der Hauptlichtfarbe Rot von Lichtfunktionen von Heckleuchten keine farbiges Licht abstrahlenden Lichtquellen verwendet werden müssen, jedoch dennoch rotes Licht abstrahlende Lichtquellen verwendet werden können. Dies schafft Einsparpotentiale sowohl bei der Neuentwicklung von Heckleuchten, als auch bei der Herstellung hierfür vorgesehener Lichtquellen.

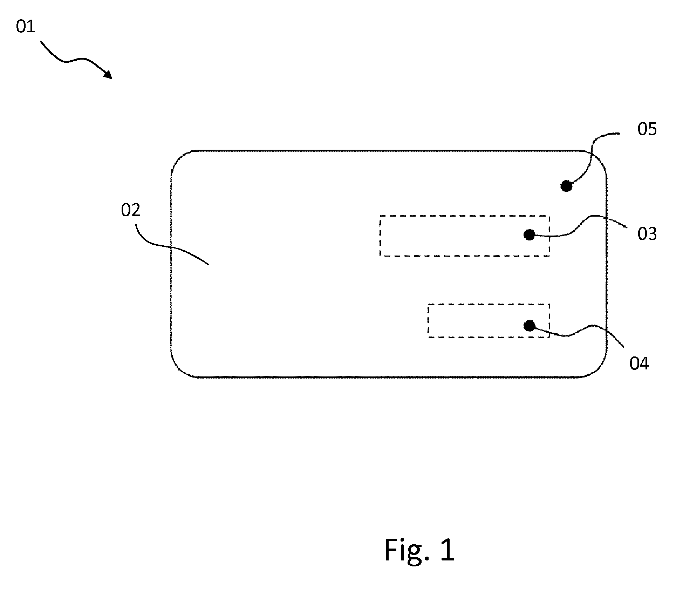

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigt in schematischer Darstellung die einzige
- Fig. 1: eine Draufsicht auf eine vollständig einfarbig eingefärbte Lichtscheibe einer Kraftfahrzeugleuchte mit mehreren Lichtfunktionen, von denen zumindest zwei unterschiedliche Lichtfarben aufweisen.

Eine in der einzigen Fig. 1 ganz oder in Teilen dargestellte Kraftfahrzeugleuchte 01 weist eine vollständig in einer von einer reinen Graustufe abweichenden Lichtscheibenfarbe eingefärbte Lichtscheibe 02 auf.

Die Lichtscheibe 02 ist damit weder grau bis schwarz, noch farblos.

Die in der Lichtscheibenfarbe einheitlich eingefärbte Lichtscheibe 02 kann jedoch einen Graustufenanteil aufweisen, so dass die Lichtscheibenfarbe beispielsweise ein mehr oder minder graues Rot sein kann.

Die Kraftfahrzeugleuchte 01 weist darüber hinaus mindestens ein zumindest zwei Licht unterschiedlicher Lichtquellenfarben abstrahlende Lichtquellen umfassendes erstes Leuchtmittel zur Erfüllung mindestens einer ersten Lichtfunktion 03 der Kraftfahrzeugleuchte 01 auf, welcher ein in Fig. 1 zur Veranschaulichung angedeuteter Flächenabschnitt der Lichtscheibe 02 als Lichtdurchtrittsfläche zugeordnet sein kann.

Ein gemeinsam von den Licht unterschiedlicher Lichtquellenfarben abstrahlenden Lichtquellen ausgestrahltes Mischlicht weist eine Mischfarbe auf, welche beim Durchtritt des Mischlichts durch die Lichtscheibe hindurch zu einer Lichtfarbe einer ersten Lichtfunktion 03 gefiltert wird.

Abweichend von einer vollflächig farblosen Lichtscheibe ist ein mit einer einheitlich einfarbigen Lichtscheibe einhergehendes Problem, dass erste Lichtfunktionen mit von der Lichtscheibenfarbe abweichender Lichtfarbe ohne zusätzliche Maßnahmen nicht verwirklicht werden können.

Durch Verwirklichung mindestens einer ersten Lichtfunktion 03 mit von der Lichtscheibenfarbe abweichender Lichtfarbe vermittels mindestens eines ersten Leuchtmittels, welches zumindest zwei Licht unterschiedlicher Lichtquellenfarben abstrahlende Lichtquellen umfasst, deren gemeinsam ausgestrahltes Mischlicht eine Mischfarbe aufweist, welche beim Durchtritt des Mischlichts durch die Lichtscheibe 02 hindurch zu einer Lichtfarbe einer ersten Lichtfunktion 03 gefiltert wird, kann trotz Transmission durch eine einfarbige, beispielsweise rote Lichtscheibe 02 ein gesetzlich zulässiger Farbort erfüllt werden.

Die Kraftfahrzeugleuchte 01 kann außerdem mindestens ein weiteres zumindest zwei Licht unterschiedlicher Lichtquellenfarben abstrahlende Lichtquellen umfassendes erstes Leuchtmittel zur Erfüllung mindestens einer weiteren ersten Lichtfunktion 04 der Kraftfahrzeugleuchte 01 aufweisen, welcher ein in Fig. 1 zur Veranschaulichung angedeuteter weiterer Flächenabschnitt der Lichtscheibe 02 als Lichtdurchtrittsfläche zugeordnet sein kann.

Die Kraftfahrzeugleuchte 01 kann alternativ oder zusätzlich zur Erfüllung mindestens einer zweiten Lichtfunktion 05 mit einer von der Lichtfarbe einer ersten Lichtfunktion 03, 04 abweichenden Lichtfarbe mindestens ein zweites Leuchtmittel mit mindestens einer Licht einer Lichtquellenfarbe abstrahlenden Lichtquelle aufweisen.

Die Lichtfarbe der zweiten Lichtfunktion 05 entspricht vorzugsweise der Lichtscheibenfarbe, wodurch ein zur Erfüllung mindestens einer zweiten Lichtfunktion 05 mit einer von der Lichtfarbe einer ersten Lichtfunktion 03, 04 abweichenden Lichtfarbe vorgesehenes zweites Leuchtmittel lediglich eine oder mehrere Licht einer Lichtquellenfarbe abstrahlende Lichtquellen benötigt.

Demnach kann die Lichtscheibe 02 bevorzugt vollständig in einer der Lichtfarbe einer zweiten Lichtfunktion 05 entsprechenden Lichtscheibenfarbe eingefärbt sein.

Beispielsweise kann die Lichtscheibe 02 entsprechend mindestens einer zweiten Lichtfunktion 05 roter Lichtfarbe, wie beispielsweise einer eine Begrenzungslichtfunktion, wie etwa einer Rücklichtfunktion, zur Sicherstellung einer Sichtbarkeit des Kraftfahrzeugs bei Nacht und/oder Tag sicherstellenden Schlusslichtfunktion und/oder einer eine Bremstätigkeit anzeigenden Bremslichtfunktion einheitlich in roter Lichtscheibenfarbe eingefärbt sein.

Wichtig ist hervorzuheben, dass die Lichtscheibe 02 auch unabhängig vom Vorhandensein eines zur Erfüllung einer zweiten Lichtfunktion 05 vorgesehenen zweiten Leuchtmittels vollständig in einer beispielsweise roten Lichtscheibenfarbe einheitlich eingefärbt sein kann.

Das mindestens eine zur Erfüllung einer ersten Lichtfunktion 03, 04 mit einer von Rot abweichenden Lichtfarbe vorgesehenes erstes Leuchtmittel umfasst in Verbindung mit einer einheitlich in roter Lichtscheibenfarbe eingefärbten Lichtscheine 02 mindestens eine Licht grüner Lichtquellenfarbe abstrahlende Lichtquelle.

Die zur Erfüllung einer ersten Lichtfunktion 03 vorgesehenen, Licht unterschiedlicher Lichtquellenfarben abstrahlenden Lichtquellen zumindest eines wenigstens zwei Licht unterschiedlicher Lichtquellenfarben abstrahlende Lichtquellen umfassenden ersten Leuchtmittels sowie gegebenenfalls zur Erfüllung einer weiteren ersten Lichtfunktion 04 vorgesehene, Licht unterschiedlicher Lichtquellenfarben abstrahlenden Lichtquellen zumindest eines wenigstens zwei Licht unterschiedlicher Lichtquellenfarben abstrahlende Lichtquellen umfassenden weiteren ersten Leuchtmittels können unabhängig voneinander betrieben werden.

Hierdurch kann ein wenigstens zwei Licht unterschiedlicher Lichtquellenfarben abstrahlende Lichtquellen umfassendes erstes Leuchtmittel durch Betrieb seiner Lichtquellen sämtlicher Lichtquellenfarben eine erste Lichtfunktion 03 der Kraftfahrzeugleuchte 01 erfüllen, sowie durch Betrieb nur seiner Lichtquellen einer Lichtquellenfarbe eine zweite Lichtfunktion 05 mit einer von einer ersten Lichtfarbe abweichenden Lichtfarbe erfüllen.

Sofern mindestens ein wenigstens zwei Licht unterschiedlicher Lichtquellenfarben abstrahlende Lichtquellen umfassendes erstes Leuchtmittel Lichtquellen umfasst, die drei oder mehr unterschiedliche Lichtquellenfarben abstrahlen, so können durch paar- oder gruppenweise Kombination des Betriebs unterschiedliche Lichtquellenfarben abstrahlender Lichtquellen eines ersten Leuchtmittels zusätzlich zu einer ersten Lichtfunktion 03 eine oder mehrere Lichtfunktionen 04, 05 mit einer von einer Lichtfarbe einer ersten Lichtfunktion abweichenden Lichtfarbe erfüllt werden, beispielsweise eine weitere ersten Lichtfunktion 04 mit einer von einer ersten Lichtfunktion 03 und einer zweiten Lichtfunktion 05 abweichenden Lichtfarbe.

Eine Lichtfarbe einer ersten Lichtfunktion 03 ist vorzugsweise gelb für eine einer Fahrtrichtungsanzeige dienenden Wiederholblinklichtfunktion.

In Verbindung mit einer roten Lichtscheibe weist damit mindestens ein zumindest zwei Licht unterschiedlicher Lichtquellenfarben abstrahlende Lichtquellen umfassendes erstes Leuchtmittel zur Erfüllung einer ersten Lichtfunktion 03 gelber Lichtfarbe mindestens eine Licht roter und/oder gelber Lichtquellenfarbe abstrahlende Lichtquelle und mindestens eine Licht grüner Lichtquellenfarbe abstrahlende Lichtquelle auf.

Eine Lichtfarbe einer alternativen oder zusätzlichen ersten Lichtfunktion ist vorzugsweise weiß für eine ein Rückwärtsfahren anzeigende und/oder einer Rückfahrbeleuchtung dienenden Rückfahrlichtfunktion.

Beispielsweise kann bei weißen Lichtquellen, wie beispielsweise weißen LEDs durch zusätzlichen Eintrag von Licht grüner Lichtquellenfarbe der Farbfiltereffekt durch eine rote Lichtscheibe kompensiert werden, so dass die Kombination von weißem und grünem Licht einen gesetzlich zulässigen Farbort einer Rückfahrlichtfunktion erfüllt.

Zumindest bei den unterschiedliche Lichtquellenfarben abstrahlenden Lichtquellen des einen oder der mehreren Leuchtmittel der Kraftfahrzeugleuchte 01 kann es sich um LEDs und/oder Emitterschichten einer oder mehrerer OLEDs handeln.

Die Kraftfahrzeugleuchte 01 kann einen von der Lichtscheibe 02 und einem Leuchtengehäuse zumindest zum Teil umschlossenen Leuchteninnenraum aufweisen, in dem mindestens ein zur Erfüllung wenigstens einer ersten Lichtfunktion 03 vorgesehenes erstes Leuchtmittel und/oder zumindest ein zur Erfüllung wenigstens einer weiteren Lichtfunktion, beispielsweise einer weiteren ersten Lichtfunktion 04 oder einer zweiten Lichtfunktion 05 vorgesehenes Leuchtmittel wenigestens teilweise beherbergt sein kann.

Ein gegebenenfalls vorgesehenes Leuchtengehäuse bzw. der gegebenenfalls vorgesehene Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Die Kraftfahrzeugleuchte kann beispielsweise als Heckleuchte für ein Kraftfahrzeug ausgebildet sein.

Um eine ausreichende Lichtdurchmischung des aus Licht unterschiedlicher Lichtquellenfarben zusammengesetzten Mischlichts eines zur Erfüllung einer ersten Lichtfunktion 03 und/oder einer weiteren ersten Lichtfunktion 04 vorgesehenen Leuchtmittels mit einer oder mehreren Licht unterschiedlicher Lichtfarbe abstrahlenden Lichtquellen zu erhalten, kann mindestens ein einer oder mehreren Lichtquellen zugeordnetes Lichtleiterelement und/oder mindestens ein Optikelement, wie beispielsweise ein oder mehrere Reflektoren, eine oder mehrere Linsen und/oder eine oder mehrere im Strahlengang zwischen wenigstens einer Lichtquelle eines ersten Leuchtmittels und der Lichtscheibe angeordnete Optikscheiben und/oder ein oder mehrere Diffusoren vorgesehen sein, so dass im Fernfeld eine einheitliche Mischfarbe erhalten wird.

Beispielsweise kann einer oder mehreren Licht unterschiedlicher Lichtfarbe abstrahlenden Lichtquellen wenigstens eines zur Erfüllung einer ersten Lichtfunktion 03 vorgesehenen ersten Leuchtmittels oder wenigstens eines zur Erfüllung einer weiteren ersten Lichtfunktion 04 vorgesehenen weiteren ersten Leuchtmittels mindestens ein Optikelement in Form eines Reflektors zugeordnet sein.

Bei der Reflektorlösung ist als Besonderheit zu beachten, dass die Licht einer ersten Lichtquellenfarbe abstrahlenden Lichtquellen und/oder die Licht in einer von der ersten Lichtquellenfarbe abweichenden Lichtquellenfarbe abstrahlenden Lichtquellen zum Reflektor fokussiert bzw. defokusiert positioniert sein können. Durch die beidseitige Defokussierung der Licht unterschiedlicher Lichtquellenfarbe abstrahlenden Lichtquellen kann beispielsweise eine gleichmäßigere Lichtdurchmischung erzielt werden.

Wichtig ist hervorzuheben, dass grundsätzlich wenigstens einer Lichtquelle zumindest eines zur Erfüllung mindestens einer Lichtfunktion 03, 04, 05 der Kraftfahrzeugleuchte 01 vorgesehenen Leuchtmittels ein oder mehrere zur Ausformung einer beispielsweise gesetzlich vorgegebenen Lichtverteilung beitragende Optikelemente zur Lichtlenkung zugeordnet sein können.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben und/oder um einen Diffusor oder dergleichen handeln, um nur einige denkbare Optikelemente zu nennen.

Beispielsweise kann in einem gegebenenfalls vorgesehenen Leuchteninnenraum mindestens ein wenigstens einer Lichtquelle zumindest eines Leuchtmittels zugeordneter Reflektor untergebracht sein. Der Reflektor kann zumindest zum Teil durch ein separates Bauteil und/oder durch wenigstens einen Teil eines Leuchtengehäuses gebildet sein, beispielsweise vermittels einer zumindest teilweisen, reflektierenden Beschichtung.

Alternativ oder zusätzlich kann die Lichtscheibe 02 als ein Optikelement ausgebildet sein, beispielsweise indem sie vorzugsweise an deren mindestens einem Leuchtmittel und/oder einem von ihr und einem Leuchtengehäuse zumindest teilweise umschlossenen Leuchteninnenraum zugewandter Innenseite mit einer zur Erzeugung einer oder mehrerer beispielsweise gesetzlich vorgegebener Lichtverteilungen beitragenden optischen Struktur versehen ist.

Beispielsweise können Walzen- Kissen- oder andersartige optische Strukturen in oder auf der Innenseite der Lichtscheibe 02 und/oder einer zwischen mindestens einem Leuchtmittel bzw. dessen Lichtquellen und der Lichtscheibe 02 angeordneten Optikscheibe vorgesehen sein, um einer gewünschten Lichtverteilung für eine vorgegebene Lichtfunktion beizutragen.

Mindestens einer Lichtquelle wenigstens eines beispielsweise in einem gegebenenfalls vorgesehenen Leuchteninnenraum beherbergten, zur Erfüllung mindestens einer Lichtfunktion 03, 04, 05 der Kraftfahrzeugleuchte 01 vorgesehenen Leuchtmittels kann zumindest ein Lichtleiterelement zugeordnet sein.

Ein Lichtleiterelement besteht aus mindestens einer Lichteinkoppelpartie sowie mindestens einer Lichtauskoppelpartie. Die Lichtführung innerhalb des Lichtleiterelements erfolgt quasi verlustfrei vermittels Totalreflexion (TIR; Total Internal Reflexion). Unter anderem kann hierdurch zumindest zum Teil auf andere Optikelemente verzichtet werden. Beim zur Herstellung von Lichtleiterelementen verwendeten Material handelt es sich überwiegend um transparente Kunststoffe. Die Herstellung der Lichtleiterelemente kann dadurch kostengünstig und automatisiert im Spritzguss erfolgen.

Die Lichteinkoppelpartie umfasst wenigstens eine zur Lichteinkopplung von mindestens einer ersten und mindestens einer zweiten Lichtquelle unterschiedlicher Lichtquellenfarben zumindest eines Leuchtmittels vorgesehene Lichteinkoppelfläche. Dabei können getrennte Lichteinkoppelflächen für die Licht unterschiedlicher Lichtquellenfarben abstrahlenden Lichtquellen vorgesehen sein.

Die Lichtauskoppelpartie umfasst mindestens eine zur Lichtauskopplung des in das Lichtleiterelement eingekoppelten Lichts vorgesehene, vorzugsweise auf der Lichtleitervorderseite angeordnete, von der Lichteinkoppelfläche verschiedene Lichtaustrittsfläche, sowie gegebenenfalls mindestens eine wenigstens einer Lichtaustrittsfläche zugeordnete, von dieser zugeordneten Lichtaustrittsfläche verschiedene, beispielsweise auf der Lichtleiterrückseite gegenüber der Lichtaustrittsfläche angeordnete Lichtumlenkfläche.

Damit das in ein Lichtleiterelement eingekoppelte Licht einer beispielsweise gesetzlich vorgegebenen Lichtverteilung genügend oder beitragend via der Lichtaustrittsfläche wieder austreten kann, kann die Lichtaustrittsfläche und/oder eine gegebenenfalls vorgesehene Lichtumlenkfläche mit Lichtauskoppelstrukturen versehen sein. An der Lichtaustrittsfläche angeordnete Lichtauskoppelstrukturen stehen dabei unter einem Winkel zum in das Lichtleiterelement eingekoppelten Licht, bei dem keine Totalreflexion stattfindet und das Licht gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche austritt. Alternativ oder zusätzlich an einer Lichtumlenkfläche vorgesehene Lichtauskoppelstrukturen hingegen lenken das in das Lichtleiterelement eingekoppelte Licht unter einem Winkel zur Lichtaustrittsfläche hin, bei dem an dieser keine Totalreflexion mehr stattfindet, so dass das Licht den Übergang zwischen dem Material des Lichtleiterelements und dem dieses umgebenden Medium im Bereich der Lichtaustrittsfläche passieren kann. Bei dieser Passage tritt das Licht wiederum gegebenenfalls unter Brechung beim Übergang vom Material des Lichtleiterelements zum dieses umgebenden Medium in einer oder mehreren, einer vorgegebenen Lichtverteilung genügenden oder beitragenden Richtungen aus der Lichtaustrittsfläche aus.

Dabei können eine oder mehrere Lichtaustrittsflächen und/oder eine oder mehrere gegebenenfalls vorgesehene, einer oder mehreren Lichtaustrittsflächen zugeordnete Lichtumlenkflächen mit Lichtauskoppelstrukturen und/oder frei von Lichtauskoppelstrukturen ausgeführt sein.

Diese Lichtauskoppelstrukturen können beispielsweise eine Prismenstruktur umfassen, bestehend aus mehreren Prismenelementen als Lichtauskoppelemente.

Ein gegebenenfalls vorgesehenes Lichtleiterelement kann Teil eines Leuchtmittels sein, oder als separates Bauteil der Kraftfahrzeugleuchte 01 ausgebildet sein, beispielsweise indem es in einem gegebenenfalls vorgesehenen Leuchteninnenraum untergebracht ist.

Dem Lichtleiterelement kann mindestens ein Optikelement, wie etwa ein Reflektor und/oder eine Optikscheibe und/oder ein Rinnenkonzentrator zugeordnet sein, um nur einige mögliche Optikelemente aufzuzählen.

Das Lichtleiterelement kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen.

Wichtig ist hervorzuheben, dass die Kraftfahrzeugleuchte 01 alternativ oder zusätzlich zu einzelnen oder mehreren Merkmalen der zuvor beschriebenen Ausführungsvarianten ein Merkmal oder eine Kombination mehrerer Merkmale einer oder mehrerer einleitend beschriebener Kraftfahrzeugleuchten sowie alternativ oder zusätzlich ein Merkmal oder eine Kombination mehrerer Merkmale einer oder mehrerer aus einem oder mehreren einleitend zum Stand der Technik erwähnten Dokumenten bekannter Kraftfahrzeugleuchten und/oder eines oder mehrerer aus einem oder mehreren einleitend zum Stand der Technik erwähnten Dokumenten bekannter Leuchtmittel und/oder eines oder mehrerer aus einem oder mehreren einleitend zum Stand der Technik erwähnten Dokumenten bekannter Lichtleiterelemente aufweisen kann.

Die Erfindung ermöglicht es, eine oder mehrere erste Lichtfunktionen 03, 04 einer beispielsweise als eine Heckleuchte ausgebildeten Kraftfahrzeugleuchte 01 mit nichtroter Lichtfarbe, wie dies beispielsweise bei einer Rückfahrlichtfunktion eines Rückfahrscheinwerfers und/oder einer Wiederholblinklichtfunktion eines Fahrtrichtungsanzeigers der Fall ist, trotz Transmission durch eine rote Lichtscheibe 02 hindurch ihren gesetzlich zulässigen Farbort zu erfüllen.

Erreicht wird dies durch mindestens eine einem zur Erfüllung einer betreffenden ersten Lichtfunktion 03, 04 vorgesehenen ersten Leuchtmittel zusätzlich dezidierte Lichtquelle, welche durch ihr Lichtspektrum die in der roten Lichtscheibe 02 herausgefilterten Farbanteile der mindestens einen Licht einer anderen Lichtquellenfarbe abstrahlenden Lichtquelle kompensiert. Dadurch lässt sich eine farblich einheitlich wirkende rote Lichtscheibe 02 für alle Lichtfunktionen 03, 04, 05 der Heckleuchte realisieren.

Das Leuchtmittel und/oder dessen Lichtquellen und/oder dessen zusätzliche, Licht einer anderen Lichtquellenfarbe abstrahlenden Lichtquellen kann zusätzlich einzeln oder in beliebiger Kombination beispielsweise zur Erzeugung und/oder zum Beitrag einer einer für eine Lichtfunktion 03, 04, wie etwa Rückfahrlichtfunktion oder

Wiederholblinklichtfunktion gesetzlich vorgegebenen Lichtverteilung und/oder Farbort dienenden/notwendigen Lichtumlenkung miteinander mindestens ein Lichtleiterelement und/oder mindestens einen direkten oder indirekten Reflektor und/oder mindestens ein Linsensystem und/oder mindestens einen Diffusor umfassen.

Die Lichtscheibe 02 ist von ihrem roten Farbton vorzugsweise an die Begrenzungslichtfunktion beziehungsweise Bremslichtfunktion angepasst. Das Licht der Lichtquellen von nicht-roten Lichtfunktionen, wie beispielsweise einer Ruckfahrlichtfunktion weißer Lichtfarbe und/oder einer Widerholblinklichtfunktion gelber Lichtfarbe werden bei der Transmission durch eine entsprechend rote Lichtscheibe 02 soweit verfälscht, dass diese ihren gesetzlich zulässigen Farbort nicht mehr erreichen. Die Erfindung erlaubt durch Erzeugung von Mischlicht einer Mischfarbe aus mindestens zwei unterschiedlichen Lichtquellenfarben, welche Mischfarbe beim Durchtritt des Mischlichts durch die Lichtscheibe hindurch zu einer Lichtfarbe einer ersten Lichtfunktion 03, 04 gefiltert wird, diese ersten Lichtfunktionen 03, 04 mit einer roten Lichtscheibe 02 vom Farbort gesetzlich zulässig zu betreiben.

Hierzu weist ein zur Erfüllung einer entsprechenden ersten Lichtfunktion 03, 04 nicht roter Lichtfarbe nicht nur Lichtquellen einer Lichtquellenfarbe auf, sondern mindestens eine weitere Lichtquelle mit mindestens einer abweichenden Lichtquellenfarbe auf. Dadurch wird die entsprechende erste Lichtfunktion 03, 04 mit einer oder mehreren zusätzlichen dezidierten Lichtquellen kombiniert, welche mit einer hinsichtlich des von der mindestens einen zusätzlichen dezidierten Lichtquelle abgestrahlten Lichtspektrums die in der roten Lichtscheibe herausgefilterten Spektralanteile kompensiert.

Beispielsweise kann bei weißen LEDs durch zusätzlichen Eintrag von grünem Licht der Farbfiltereffekt durch eine rote Lichtscheibe kompensiert werden, so dass die Kombination von weißem und grünem Licht den gesetzlich zulässigen Farbort einer Rückfahrlichtfunktion erfüllt. Wichtig ist eine ausreichende Lichtdurchmischung der Farbanteile im Mischlicht, so dass im Fernfeld eine einheitliche Farbe messbar wird.

Die Erfindung ist insbesondere im Bereich der Herstellung von

Kraftfahrzeugleuchten sowie von Leuchtmitteln für Kraftfahrzeugleuchten gewerblich anwendbar.

### Bezugszeichenliste

- 01: Kraftfahrzeugleuchte
- 02: Lichtscheibe
- 03: erste Lichtfunktion
- 04: weitere erste Lichtfunktion
- 05: zweite Lichtfunktion

## Patentansprüche

1. Kraftfahrzeugleuchte (01) mit:
- einer Lichtscheibe (02) und
- mindestens einem zumindest zwei Licht unterschiedlicher Lichtquellenfarben abstrahlende Lichtquellen umfassenden ersten Leuchtmittel für mindestens eine erste Lichtfunktion (03, 04) der Kraftfahrzeugleuchte (01),
**dadurch gekennzeichnet,**
**dass** die Lichtscheibe (02) vollständig in einer Lichtscheibenfarbe eingefärbt ist, und ein gemeinsam von den Licht unterschiedlicher Lichtquellenfarben abstrahlenden Lichtquellen ausgestrahltes Mischlicht eine Mischfarbe aufweist, welche beim Durchtritt des Mischlichts durch die Lichtscheibe (02) hindurch zu einer Lichtfarbe einer ersten Lichtfunktion (03, 04) gefiltert wird.

2. Kraftfahrzeugleuchte nach Anspruch 1, wobei die Licht unterschiedlicher Lichtquellenfarben abstrahlenden Lichtquellen zumindest eines wenigstens zwei Licht unterschiedlicher Lichtquellenfarben abstrahlende Lichtquellen umfassenden ersten Leuchtmittels unabhängig voneinander betreibbar sind.

3. Kraftfahrzeugleuchte nach Anspruch 1 oder 2, wobei die Kraftfahrzeugleuchte (01) zur Erfüllung mindestens einer zweiten Lichtfunktion (05) mit einer von der Lichtfarbe einer ersten Lichtfunktion (03, 04) abweichenden Lichtfarbe mindestens ein zweites Leuchtmittel mit mindestens einer Licht einer Lichtquellenfarbe abstrahlenden Lichtquelle aufweist.

4. Kraftfahrzeugleuchte nach Anspruch 3, wobei die Lichtscheibe (02) vollständig in einer der Lichtfarbe einer zweiten Lichtfunktion (05) entsprechenden Lichtscheibenfarbe eingefärbt ist.

5. Kraftfahrzeugleuchte nach Anspruch 4, wobei die Lichtscheibe (02) vollständig in einer roten Lichtscheibenfarbe eingefärbt ist.

6. Kraftfahrzeugleuchte nach Anspruch 5, wobei das mindestens eine zur Erfüllung einer ersten Lichtfunktion (03, 04) mit einer von Rot abweichenden Lichtfarbe vorgesehenes erstes Leuchtmittel mindestens eine Licht grüner Lichtquellenfarbe abstrahlende Lichtquelle umfasst.

7. Kraftfahrzeugleuchte nach einem der vorhergehenden Ansprüche, wobei eine Lichtfarbe einer ersten Lichtfunktion (03, 04) gelb für eine einer Fahrtrichtungsanzeige dienenden Wiederholblinklichtfunktion ist.

8. Leuchtmittel nach einem der vorhergehenden Ansprüche, wobei eine Lichtfarbe einer ersten Lichtfunktion (03, 04) weiß für eine ein Rückwärtsfahren anzeigende und/oder einer Rückfahrbeleuchtung dienenden Rückfahrlichtfunktion ist.

9. Leuchtmittel nach einem der vorhergehenden Ansprüche, wobei es sich zumindest bei den unterschiedliche Lichtquellenfarben abstrahlenden Lichtquellen um LEDs und/oder Emitterschichten einer oder mehrerer OLEDs handelt.

10. Leuchtmittel nach einem der vorhergehenden Ansprüche, wobei einer oder mehreren Licht unterschiedlicher Lichtfarbe abstrahlenden Lichtquellen wenigstens eines ersten Leuchtmittels mindestens ein Lichtleiterelement und/oder mindestens ein Optikelement zugeordnet ist.

11. Leuchtmittel nach Anspruch 10, wobei einer oder mehreren Licht unterschiedlicher Lichtfarbe abstrahlenden Lichtquellen wenigstens eines ersten Leuchtmittels mindestens ein Optikelement in Form eines Reflektors zugeordnet ist, wobei Licht unterschiedlicher Lichtquellenfarbe abstrahlende Lichtquellen zum Reflektor fokussiert und/oder defokusiert angeordnet sind.

12. Leuchtmittel nach einem der vorhergehenden Ansprüche, wobei wenigstens einer Lichtquelle zumindest eines zur Erfüllung mindestens einer Lichtfunktion (03, 04, 05) der Kraftfahrzeugleuchte (01) vorgesehenen Leuchtmittels ein oder mehrere zur Ausformung einer beispielsweise gesetzlich vorgegebenen Lichtverteilung beitragende Lichtleiterelemente und/oder Optikelemente zur Lichtlenkung zugeordnet sind.

13. Leuchtmittel nach einem der vorhergehenden Ansprüche, wobei die Lichtscheibe (02) als ein Optikelement ausgebildet ist.

14. Leuchtmittel nach einem der vorhergehenden Ansprüche, wobei mindestens einer Lichtquelle wenigstens eines Leuchtmittels zumindest ein Lichtleiterelement zugeordnet ist.

15. Kraftfahrzeugleuchte nach einem der voranstehenden Ansprüche, wobei die Kraftfahrzeugleuchte (01) einen von einem Leuchtengehäuse und der Lichtscheibe (02) zumindest teilweise umschlossenen Leuchteninnenraum aufweist, in dem wenigstens zum Teil mindestens ein zumindest zwei Licht unterschiedlicher Lichtquellenfarben abstrahlende Lichtquellen umfassendes erstes Leuchtmittel für mindestens eine erste Lichtfunktion (03, 04) der Kraftfahrzeugleuchte beherbergt ist.
